# EUROPEAN PATENT APPLICATION

(11) **EP 4 159 532 A1**
(43) Date of publication of application: **05.04.2023**
(21) Application number: 21814236.2
(22) Date of filing: 25.05.2021
(51) Int. Cl.: B60L 53/80, B60L 53/30, B60S 5/06

(54) **INSTALLATION AND REMOVAL MECHANISM, MULTIFUNCTIONAL BATTERY-SWAPPING DEVICE COMPRISING SAME, AND BATTERY SWAPPING STATION**

(30) Priority: 25.05.2020 CN 202010453481; 25.05.2020 CN 202120373784 U
(71) Applicant: Aulton New Energy Automotive Technology Group, Guangzhou, Guangdong 510700 (CN); Shanghai Dianba New Energy Technology Co., Ltd., Shanghai 201308 (CN)
(72) Inventor: LAN, Zhibo, Shanghai 201308 (CN); HUANG, Chunhua, Shanghai 201308 (CN)
(74) Representative: Bittner, Bernhard
(86) International application number: PCT/CN2021/095879
(87) International publication number: WO 2021/238936

(57) **Abstract**

An installation and removal mechanism, a multifunctional battery-swapping device comprising same, and a battery swapping station. The installation and removal mechanism is used for installing and removing a battery pack locked by a locking mechanism. The installation and removal mechanism comprises an upper plate (11) and a first positioning mechanism (13), wherein the first positioning mechanism (13) is installed on the upper plate (11) in a foldable manner, such that the first positioning mechanism can perform position switching between a vertical state and a horizontal state; and the first positioning mechanism (13) is used for positioning the battery pack when same is in the vertical state, and then driving, by means of the upper plate (11), the battery pack to move. The multifunctional battery-swapping device comprises at least two installation and removal mechanisms, wherein each installation and removal mechanism corresponds to one locking mechanism, and different installation and removal mechanisms are respectively used for installing and removing battery packs locked by different locking mechanisms. The battery swapping station comprises the multifunctional battery-swapping device. When the installation and removal mechanism is applied to the multifunctional battery-swapping device, the first positioning mechanism (13) is hidden, such that the first positioning mechanism (13) cannot affect the actions of installing and removing battery packs by other installation and removal mechanisms; and by means of simultaneously configuring a plurality of installation and removal mechanisms on one battery swapping device, the battery swapping device can be simultaneously used for installing and removing various types of battery packs, thereby improving the compatibility of the battery swapping device.

## Description

This application claims priority of Chinese patent application CN2020104534817 and CN2021203737848, filed on May 25th, 2020. The contents of the above Chinese patent applications are incorporated herein by reference in their entirety.

### Field of invention

The present invention relates to a field of battery swapping, and in particular to an installation and removal mechanism, a multifunctional battery-swapping device comprising same, and a battery swapping station.

### Prior arts

With rapid development of new energy electric vehicles, a quick-swap electric vehicle has emerged, wherein the quick-swap electric vehicle no longer needs to wait for several hours for battery charging, but only needs to remove a low charged battery on the electric vehicle and reinstall a full charged battery. As a place dedicated to providing battery quick-swap service for electric vehicles, a battery swapping station has been established and operated in a large scale throughout the country.

However, current battery swapping stations are only customized according to vehicle models and battery pack specifications of various automobile manufacturers, and locking methods used by different automobile manufacturers for battery packs are also different, which leads to that a battery swapping station can only replace battery packs with one specification and the same locking method, which greatly limits the development prospects of the battery swapping stations.

Since a traditional battery swapping station can only replace a battery pack with one size specification, an installation and removal mechanism used for installing and removing the battery pack in the battery swapping station is specially designed for a battery pack with one size specification. The installation and removal mechanism comprises a positioning fork for positioning the battery pack, and the relative position between the battery pack and the battery swapping equipment is fixed by the cooperation between the positioning fork and the battery pack, thereby driving the battery pack to move and realizing the swap of the battery pack. In order to ensure the matching accuracy between the positioning fork and the battery pack and improve the reliability of the battery pack movement, the size of the positioning fork is designed according to the size of the battery pack, and if the height size of the battery pack becomes larger, the positioning fork may collide with the battery pack; and if the height size of the battery pack becomes smaller, the positioning fork may not be able to position the battery pack.

### Content of the present invention

The technical problem to be solved in the present application is to overcome the problem of collision between the positioning fork and the battery pack caused by the increase of the height size of the battery pack in the prior art, hence providing an installation and removal mechanism, a multifunctional battery-swapping device comprising same, and a battery swapping station.

The present invention solves the technical problem by the following technical solutions:
An installation and removal mechanism, which is used for installing and removing a battery pack locked by a locking mechanism, wherein the installation and removal mechanism comprises an upper plate and a first positioning mechanism, and the first positioning mechanism is installed on the upper plate in a foldable manner, such that the first positioning mechanism can perform position switching between a vertical state and a horizontal state, and the first positioning mechanism is used for positioning the battery pack when the first positioning mechanism is in the vertical state, and then driving the battery pack to move by means of the upper plate.

In the technical solution, when the installation and removal mechanism is working, the first positioning mechanism is in the vertical state and can fork the battery pack, and then the upper plate drives the battery pack to move, realizing the unlocking, installation and removal of the battery pack; when the size of the battery pack along the direction of the first positioning mechanism becomes larger or the requirements for the height of the installation and removal mechanism are limited, the first positioning mechanism can be hidden by switching the first positioning mechanism to the horizontal state, so that the first positioning mechanism is suitable for different sizes of battery packs and working environments with different height requirements; at the same time, when other installation and removal mechanisms are working, by means of the above structural setting of the installation and removal mechanisms, the first positioning mechanism is hidden such that the first positioning mechanism cannot affect the actions of installing and removing battery packs by other installation and removal mechanisms.

Preferably, the installation and removal mechanism further comprises a lower plate and a top rod;
the lower plate is located below the upper plate, and the upper plate can move relative to the lower plate;
the top rod is arranged on the lower plate, and is used for unlocking the locking mechanism;
preferably, the upper plate is provided with a hidden groove, and the top rod can rotate into the hidden groove.

In the technical solution, by means of the above structural setting of the installation and removal mechanisms, the installation and removal mechanism can install the battery pack into the corresponding locking mechanism or take the battery pack out of the locking mechanism. By means of the above structural setting of the installation and removal mechanisms, when the size of the battery pack along the direction of the first positioning mechanism becomes larger or the requirements for the height of the installation and removal mechanism are limited, the top rod is hidden, so that the top rod is suitable for different sizes of battery packs and working environments with different height requirements, and the top rod cannot affect the actions of installing and removing battery packs by other installation and removal mechanisms.

Preferably, the installation and removal mechanism further comprises a second positioning mechanism, which is fixed on the lower plate, wherein the second positioning mechanism is used to match with a positioning block on an electric vehicle, so that the position between the lower plate and the electric vehicle can be relatively fixed.

In the technical solution, the second positioning mechanism is used to make the position between the lower plate and the electric vehicle relatively fixed when unlocking or locking the battery pack.

Preferably, the second positioning mechanism is installed on the upper plate in a foldable manner, such that the second positioning mechanism can perform position switching between a vertical state and a horizontal state.

In the technical solution, by means of the above structural setting of the installation and removal mechanisms, when the size of the battery pack along the direction of the first positioning mechanism becomes larger or the requirements for the height of the installation and removal mechanism are limited, the second positioning mechanism is hidden, so that the second positioning mechanism is suitable for different sizes of battery packs and working environments with different height requirements, and the second positioning mechanism cannot affect the actions of installing and removing battery packs by other installation and removal mechanisms.

The present invention provides a multifunctional battery-swapping device, which comprises the installation and removal mechanism as described above.

The present invention provides a multifunctional battery-swapping device, which is used for installing and removing battery packs locked by different locking mechanisms, wherein the battery-swapping device comprises:
at least two installation and removal mechanisms, wherein each installation and removal mechanism corresponds to one locking mechanism, and different installation and removal mechanisms are respectively used for installing and removing battery packs locked by different locking mechanisms.

In the technical solution, a variety of installation and removal mechanisms are configured on a battery-swapping device at the same time, so that the battery-swapping device can be used for installation and removal of various types of battery packs, which improves the compatibility of the battery-swapping device, thus improving the battery-swapping efficiency, improving the compatibility of the battery-swapping device, and reducing the manufacturing cost of the battery swapping station.

Preferably, the battery-swapping device further comprises:
a control mechanism, which is used to receive the type of the locking mechanism of the battery pack to be installed and removed, and the control mechanism is also used to control the corresponding installation and removal mechanism to complete the installation and removal of the battery pack.

In the technical solution, by means of setting the control mechanism, the corresponding installation and removal mechanism can be controlled to complete the installation and removal of the battery pack according to the type of the locking mechanism of the battery pack to be installed and removed.

Preferably, the battery-swapping device further comprises a base, and the said at least two installation and removal mechanisms are detachably installed on the base;
and/or, the battery-swapping device is also provided with an avoidance area, and a installation and removal mechanism located in the avoidance area does not affect the actions of installing and removing battery packs by other installation and removal mechanisms.

In the technical solution, by means of the detachable connection between at least two installation and removal mechanisms and the base, the battery-swapping device can be selectively installed with corresponding installation and removal mechanisms according to needs, so that the battery-swapping device can be compatible with the installation and removal of battery packs under various battery-swapping requirements.

By means of setting the avoidance area, an installation and removal mechanism located in the avoidance area does not affect the actions of installing and removing battery packs by other installation and removal mechanisms.

Preferably, the battery-swapping device is also provided with an avoidance mechanism, which moves a idle installation and removal mechanism to an avoidance position, and a installation and removal mechanism located in the avoidance position does not affect the actions of installing and removing battery packs by other installation and removal mechanisms;
preferably, the avoidance mechanism comprises a turnover body, which is provided with a number of mounting surfaces circumferentially, wherein each installation and removal mechanism is separately installed on one mounting surface, and the turnover body rotates the idle installation and removal mechanism to the avoidance position during the turnover process.

In the technical solution, by means of setting the avoidance mechanism, the position of the installation and removal mechanism can be adjusted, and the idle installation and removal mechanism can be moved to the avoidance position, which increases the freedom of the design of the installation and removal mechanism design and improves the compatibility of the battery-swapping device.

In the technical solution, the turnover body rotates the idle installation and removal mechanism to the avoidance position during a turnover process, so that the idle installation and removal mechanism does not affect the actions of installing and removing battery packs by other installation and removal mechanisms.

Preferably, the said at least two installation and removal mechanisms comprise a first installation and removal mechanism and a second installation and removal mechanism;
the locking mechanism comprises a first locking mechanism and a second locking mechanism, wherein the first locking mechanism is a non rotary locking mechanism, and the second locking mechanism is a rotary locking mechanism;
the first installation and removal mechanism is used for installing and removing the first locking mechanism, and the second installation and removal mechanism is used for installing and removing the second locking mechanism.

Preferably, the installation and removal mechanism is a first installation and removal mechanism, and the locking mechanism corresponding to the first installation and removal mechanism is a first locking mechanism, wherein the first installation and removal mechanism comprises:
an upper plate and a lower plate, wherein the upper plate is located above the lower plate, and the upper plate can move relative to the lower plate;
a first positioning mechanism, which is arranged on the upper plate, and the first positioning mechanism is used for positioning the battery pack;
a top rod, which is arranged on the lower plate, and the top rod is used for unlocking the first locking mechanism.

In the technical solution, by means of the above structural setting of the first installation and removal mechanisms, the first installation and removal mechanism can install the battery pack into the corresponding first locking mechanism or take the battery pack out of the first locking mechanism.

Preferably, the battery-swapping device further comprises a fixed plate and a second installation and removal mechanism, wherein the locking mechanism corresponding to the second installation and removal mechanism is a second locking mechanism; the second installation and removal mechanism is fixed on the fixed plate, and the fixed plate can move relative to the upper plate, so that the second installation and removal mechanism can move to the installation and removal position or avoidance position; when the second installation and removal mechanism is located at the installation and removal position, the second installation and removal mechanism can install and remove the battery pack with the second locking mechanism; when the second installation and removal mechanism is located at the avoidance position, the second installation and removal mechanism does not affect the actions of installing and removing battery packs by the first installation and removal mechanism.

In the technical solution, the second installation and removal mechanism is driven to the avoidance position relative to the first installation and removal mechanism by the fixed plate, so that the first installation and removal mechanism and the second installation and removal mechanism do not affect each other and can act independently.

Preferably, the fixed plate can be turned over relative to the upper plate; when the second installation and removal mechanism is located at the installation and removal position, the second installation and removal mechanism is located above the fixed plate; when the second installation and removal mechanism is located at the avoidance position, the second installation and removal mechanism is located below the fixed plate.

In the technical solution, the second installation and removal mechanism can switch between the installation and removal position and the avoidance position through the setting of a turnover structure between the fixed plate and the upper plate.

Preferably, edges of the upper plate forms an accommodation space for accommodating the fixed plate, and the fixed plate can slide back and forth relative to the upper plate; when the fixed plate extends far away from the upper plate, the second installation and removal mechanism is located at the installation and removal position; when the fixed plate is retracted close to the upper plate, the second installation and removal mechanism is located at the avoidance position.

In the technical solution, the second installation and removal mechanism can switch between the installation and removal position and the avoidance position through the setting of the sliding structure between the fixed plate and the upper plate.

Preferably, the upper plate is provided with a hidden groove, and the top rod can rotate into the hidden groove; when the top rod is located in the hidden groove, the top rod does not affect the actions of installing and removing battery packs by the other installation and removal mechanisms;
and/or, the first installation and removal mechanism further comprises a second positioning mechanism, which is fixed on the lower plate, wherein the second positioning mechanism is used to match with a positioning block on a electric vehicle to ensure that the position between the lower plate and the electric vehicle is relatively fixed.

In the technical solution, the top rod is hidden, so that the top rod cannot affect the actions of installing and removing battery packs by other installation and removal mechanisms. The second positioning mechanism is used to ensure that the position between the lower plate and the electric vehicle is relatively fixed, and improve the stability of the battery pack installation and removal process.

Preferably, the first positioning mechanism is installed on the upper plate in a foldable manner, when the first positioning mechanism is folded from the vertical state to the horizontal state, the first positioning mechanism does not affect the actions of installing and removing battery packs by the other installation and removal mechanisms; and/or, the second positioning mechanism on the lower plate is installed on the lower plate in a foldable manner, when the second positioning mechanism is folded from the vertical state to the horizontal state, the second positioning mechanism does not affect the actions of installing and removing battery packs by the other installation and removal mechanisms.

In the technical solution, the first positioning mechanism is hidden, so that the first positioning mechanism cannot affect the actions of installing and removing battery packs by other installation and removal mechanisms. The second positioning mechanism is hidden, so that the second positioning mechanism cannot affect the actions of installing and removing battery packs by other installation and removal mechanisms. Preferably, the first positioning mechanism or the second positioning mechanism comprises a positioning mechanism body and a turnover mechanism for driving the positioning mechanism body to turn over;
preferably, the turnover mechanism comprises a driving member and a rotating shaft, the rotating shaft is connected with the positioning mechanism body, and the driving member drives the positioning mechanism body to turn over by driving the rotating shaft to rotate;
preferably, the rotating shaft is fixedly connected with the positioning mechanism body directly or via a connecting member.

In the technical solution, the turnover mechanism drives the positioning mechanism body to turn over, so that the positioning mechanism body can switch between the vertical state and the horizontal state. The driving member drives the rotating shaft connected with the driving member to rotate, thereby driving the positioning mechanism body connected with the rotating shaft to turn over, so that the positioning mechanism body can turn over and fold. The position of the rotating shaft and the positioning mechanism body is relatively fixed to ensure that the positioning mechanism body can rotate synchronously with the rotating shaft and improve the reliability of the positioning mechanism body to turn over.

Preferably, the turnover mechanism further comprises at least one position detection device, which is used to detect the position of the positioning mechanism body. In the technical solution, the position detection device is used to detect whether the positioning mechanism body is turned over in place, so as to ensure the reliability of the adjusting the position of the positioning mechanism body in place, and thus ensure the accuracy of the positioning the battery pack by the positioning mechanism.

Preferably, the battery-swapping device further comprises an alternative tray and a second installation and removal mechanism, the alternative tray is detachably installed on the upper plate, and the second installation and removal mechanism is mounted on the alternative tray;
preferably, the first installation and removal mechanism further comprises a docking mechanism, the docking mechanism is installed on the upper plate, and the alternative tray is installed on the docking mechanism.

In the technical solution, when the second installation and removal mechanism is needed for installation and removal of the battery pack, the alternative tray is installed on the upper plate to install and remove the battery pack with the second locking mechanism. The alternative tray can be detachably installed via the docking mechanism.

Preferably, the docking mechanism further comprises an electrical interface, which is used for electrical connection with an electrical interface of the second installation and removal mechanism.

In the technical solution, the electrical interface of the docking mechanism is electrically connected with the electrical interface of the second installation and removal mechanism, so that a power supply mechanism of the first installation and removal mechanism can provide power for the second installation and removal mechanism.

Preferably, the installation and removal mechanism is a second installation and removal mechanism, and the locking mechanism corresponding to the second installation and removal mechanism is a second locking mechanism, and the second installation and removal mechanism comprises:
a rotation part, wherein the second locking mechanism is provided with a locking end matched with the rotation part, and the rotation part is used to rotate the locking end of the second locking mechanism for installation and removal;
a rotation control mechanism, which is used to control the rotation of the rotation part, so that the rotation part can rotate the locking end to realize the installation and removal of the second locking mechanism.

In the technical solution, by means of the above structural setting of the second installation and removal mechanisms, the second installation and removal mechanism can install the battery pack into the corresponding second locking mechanism or take the battery pack out of the second locking mechanism.

The present invention also provides a battery swapping station, which comprises the multifunctional battery-swapping device as described above.

In the technical solution, the above multifunctional battery-swapping device is applied to the battery swapping station, so that the battery swapping station can be compatible with the installation and removal of various types of battery packs.

Preferably, the battery swapping station further comprises:
a battery compartment, wherein the battery compartment stores various battery packs corresponding to different locking mechanisms;
preferably, the number of the multifunctional battery-swapping device is two, and the two multifunctional battery-swapping device are respectively a first battery-swapping device and a second battery-swapping device; wherein the first battery-swapping device is used to remove a low charged battery pack from the electric vehicle, and the second battery-swapping device is used to install a fully charged battery pack on the electric vehicle.

In the technical solution, the battery compartment storing various types of battery packs is provided, which can provide various types of battery packs for the battery swapping of the battery swapping station. When the first battery-swapping device and the second battery-swapping device can be compatible with the replacement of the two types of battery packs, one of the battery-swapping devices is used to remove the battery pack and the other is used to install the battery pack, which can significantly improve the power exchange efficiency.

On the basis of conforming to the common sense in the art, the above preferred conditions can be arbitrarily combined to obtain better embodiment of the invention.

The positive improved effects of this invention are:
when the installation and removal mechanism is working, the first positioning mechanism is in the vertical state and can fork the battery pack, and then the upper plate drives the battery pack to move, realizing the unlocking, installation and removal of the battery pack; when the size of the battery pack along the direction of the first positioning mechanism becomes larger or the requirements for the height of the installation and removal mechanism are limited, the first positioning mechanism can be hidden by switching the first positioning mechanism to a horizontal state, so that the first positioning mechanism is suitable for different sizes of battery packs and working environments with different height requirements; at the same time, when the installation and removal mechanism is applied to the multifunctional battery-swapping device, the first positioning mechanism is hidden such that the first positioning mechanism cannot affect the actions of installing and removing battery packs by other installation and removal mechanisms;
the above multifunctional battery-swapping device and the battery swapping station comprising same, wherein a variety of installation and removal mechanisms are configured on a battery-swapping device at the same time, so that the battery-swapping device can be used for installation and removal of various types of battery packs, which improves the compatibility of the battery-swapping device; and the above multifunctional battery-swapping device is applied to the battery swapping station, which makes the battery swapping station compatible with the installation and removal of various types of battery packs, improves the compatibility of the battery-swapping device, and reduces the manufacturing cost of the battery swapping station.

### Brief description of the drawings:

Fig. 1 is a schematic view of the multifunctional battery-swapping device in the embodiment 1 of the present invention.
Fig. 2 is a layout view of the battery swapping station in the embodiment 1 of the present invention.
Fig. 3 is a schematic view of the avoidance mechanism of the multifunctional battery-swapping device in the embodiment 2 of the present invention.
Fig. 4 is a schematic view of the multifunctional battery-swapping device in the embodiment 3 of the present invention.
Fig. 5 is a schematic view of the first locking mechanism corresponding to the multifunctional battery-swapping device shown in Fig. 4.
Fig. 6 is a schematic view of the second locking mechanism of the multifunctional battery-swapping device shown in Fig. 4 at the installation and removal position.
Fig. 7 is a schematic view of the second locking mechanism of the multifunctional battery-swapping device shown in Fig. 4 at the avoidance position.
Fig. 8 is a schematic view of the second locking mechanism of the multifunctional battery-swapping device shown in Fig. 4.
Fig. 9 is a schematic view of the upper plate and fixed plate of the multifunctional battery-swapping device in the embodiment 4 of the present invention.
Fig. 10 is a schematic view of the multifunctional battery-swapping device in the embodiment 5 of the present invention.
Fig. 11 is a schematic view of the positioning fork in the embodiment 6 of the present application when it is in the vertical state.
Fig. 12 is another schematic view of the positioning fork in the embodiment 6 of the present application when it is in the vertical state.
Fig. 13 is an explosion view of the positioning fork in in the embodiment 6 of the present application.
Fig. 14 is a schematic view of the positioning fork in the embodiment 6 of the present application when it is in the horizontal state.
Fig. 15 is another schematic view of the positioning fork in the embodiment 6 of the present utility model when it is in the horizontal state.
Fig. 16 is a sectional view of the positioning fork in the embodiment 6 of the present application when it is in the vertical state.
Fig. 17 is a sectional view of the positioning fork in the embodiment 6 of the present application when it is in the horizontal state.

### Description of reference numerals:

first installation and removal mechanism 1; upper plate 11; accommodation space 111; sliding rod 112; lower plate 12; first positioning fork 13; top rod 14; second positioning fork 15; docking mechanism 16; second installation and removal mechanism 2; rotation part 21; rotation control mechanism 22; electric motor 221; decelerator 222; base 3; avoidance mechanism 4; turnover body 41; first mounting surface 411; second mounting surface 412; rotating shaft 42; fixed plate 5; alternative tray 6; first locking mechanism 50; lock connecting rod 501; lock base 502; lock tongue 503; lock groove 504; unlocking position 505; battery compartment 100; first battery-swapping device 200; second battery-swapping device 300; electric vehicle 400; positioning fork body 61; connecting hole of the rotating shaft 611; second keyway 612; driving member 62; rotation axis 63; first keyway 631; pin key 64; vertical sensor 651; horizontal sensor 652; connecting base 66; axle sleeve 67; bearing 68; turnover base 69; fixed bracket 610; bolt 620.

### Detailed description of the preferred embodiment

The following embodiments further illustrate the present invention, but the present invention is not limited by the following embodiments thereto.

### Embodiment 1

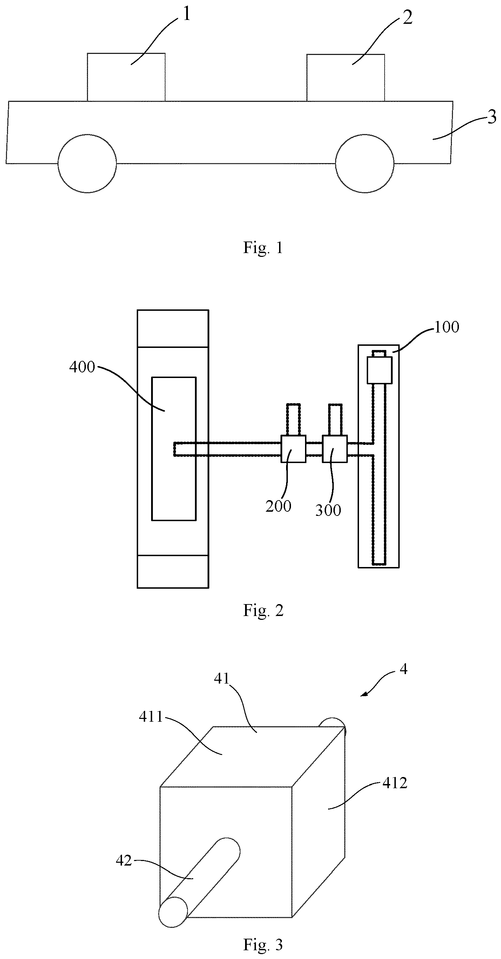

When different types of battery packs are installed together with electric vehicles or charging equipment, locking mechanisms used are usually different. As shown in Fig. 1, the present invention provides a multifunctional battery-swapping device, which is used for installing and removing battery packs locked by different locking mechanisms. Specifically, the battery-swapping device includes a first installation and removal mechanism 1 and a second installation and removal mechanism 2, the first installation and removal mechanism 1 corresponds to the first locking mechanism, and the second installation and removal mechanism 2 corresponds to the second locking mechanism, the first installation and removal mechanism 1 is used to install and remove the first battery pack locked by the first locking mechanism, and the second installation and removal mechanism 2 is used to install and remove the second battery pack locked by the second locking mechanism.

The first installation and removal mechanism 1 and the second installation and removal mechanism 2 are simultaneously configured on one battery-swapping device, so that the battery-swapping device can be used for installation and removal of two types of battery packs at the same time, which improves the compatibility of the battery-swapping device, thus improving the battery-swapping efficiency, improving the compatibility of the battery-swapping device, and reducing the manufacturing cost of the battery swapping station. Different types of battery packs, in addition to the differences in the types of battery packs such as specifications and dimensions, also include the differences in the types of locking mechanisms of the battery packs on the corresponding electric vehicles.

Wherein the battery-swapping device further comprises a control mechanism, which is used to receive the type of the locking mechanism of the battery pack to be installed and removed, and the control mechanism is also used to control the corresponding installation and removal mechanism to complete the installation and removal of the battery pack. For example, when the control mechanism receives that the type of the locking mechanism of the battery pack to be installed and removed is the first locking mechanism, that is, the battery pack is the first battery pack, the control mechanism controls the first installation and removal mechanism 1 to unlock or lock the first locking mechanism, so that the first battery pack can be removed or installed; when the control mechanism receives that the type of the locking mechanism of the battery pack to be installed and removed is the second locking mechanism, the control mechanism controls the second installation and removal mechanism 2 to unlock or lock the second locking mechanism, so that the second battery pack can be removed or installed.

As shown in Fig. 1, the battery-swapping device further comprises a base 3, and the first installation and removal mechanism 1 and the second installation and removal mechanism 2 are detachably installed on the base 3. By means of the detachable connection between the first installation and removal mechanism 1, the second installation and removal mechanism 2 and the base 3, the battery-swapping device can be independently installed with the first installation and removal mechanism 1 or the second installation and removal mechanism 2, so that the battery-swapping device can be independently used for the installation and removal of the first battery pack or the second battery pack; and the battery-swapping device can be installed with the first installation and removal mechanism 1 and the second installation and removal mechanism 2 at the same time, so that the battery-swapping device can be compatible with the installation and removal of the first battery pack and the second battery pack.

As shown in Fig. 1, the positions of the first installation and removal mechanism 1 and the second installation and removal mechanism 2 on the base 3 are relatively determined. Compared with the first installation and removal mechanism 1, the area where the second installation and removal mechanism 2 is located is an avoidance area, that is, the second installation and removal mechanism 2 does not affect the actions of installing and removing battery packs by the first installation and removal mechanism 1; compared with the second installation and removal mechanism 2, the area where the first installation and removal mechanism 1 is located is an avoidance area, that is, the first installation and removal mechanism 1 does not affect the actions of installing and removing battery packs by the second installation and removal mechanism 2.

In other embodiments, the installation and removal mechanisms can also be multiple, and multiple installation and removal mechanisms correspond to the battery packs locked by multiple different locking mechanisms. The number of installation and removal mechanisms shall be determined according to the number of locking mechanisms compatible with the battery-swapping device.

The above multifunctional battery-swapping device is applied to the battery swapping station, so that the battery swapping station can be compatible with the installation and removal of various types of battery packs. The battery swapping station using the above multifunctional battery-swapping device is shown in Fig. 2, wherein the battery swapping station includes a battery compartment 100, a first battery-swapping device 200, and a second battery-swapping device 300, and he battery compartment 100 stores the first battery pack corresponding to the first locking mechanism and the second battery pack corresponding to the second locking mechanism. The first battery-swapping device 200 and the second battery-swapping device 300 are multifunctional battery-swapping devices, wherein the first battery-swapping device 200 is used to remove a low charged battery pack from the electric vehicle 400, and the second battery-swapping device 300 is used to install a fully charged battery pack on the electric vehicle 400.

The first battery-swapping device 200 and the second battery-swapping device 300 are set as multifunctional battery-swapping devices, so that the first battery-swapping device 200 and the second battery-swapping device 300 can be used for the replacement of the first battery pack or the second battery pack at the same time. When the battery pack to be replaced is the first battery pack, while the first battery-swapping device 200 removes the first battery pack which is low charged from the electric vehicle 400, the second battery-swapping device 300 can take the first battery pack which is fully charged out of the battery compartment 100 and wait on the side; after the first battery pack is installed and removed by the first battery-swapping device 200, the second battery-swapping device 300 immediately installs the first battery pack on the electric vehicle 400. When the battery pack to be replaced is the second battery pack, while the first battery-swapping device 200 removes the second battery pack which is low charged from the electric vehicle 400, the second battery-swapping device 300 can take the second battery pack which is fully charged out of the battery compartment 100 and wait on the side; after the second battery pack is installed and removed by the first battery-swapping device 200, the second battery-swapping device 300 immediately installs the second battery pack on the electric vehicle 400. It can be seen that when the first battery-swapping device 200 and the second battery-swapping device 300 can be compatible with the replacement of the two types of battery packs, the power exchange efficiency can be significantly improved.

The first battery-swapping device 200 and the second battery-swapping device 300 can also be provided with a variety of installation and removal mechanisms to deal with various types of battery packs in the battery swapping station.

### Embodiment 2

The structure of the multifunctional battery-swapping device in Embodiment 2 is roughly the same as that in Embodiment 1, but the difference is that the position between the first installation and removal mechanism 1 and the second installation and removal mechanism 2 can be adjusted by the avoidance mechanism. That is, the battery-swapping device is also provided with an avoidance mechanism, which moves an idle installation and removal mechanism to an avoidance position, and an installation and removal mechanism located in the avoidance position does not affect the actions of installing and removing battery packs by other installation and removal mechanisms.

In the actual installation and removal requirements, the first installation and removal mechanism 1 and the second installation and removal mechanism 2 may interfere in the installation and removal process. At this time, when the first installation and removal mechanism 1 installs and removes the battery pack, the second installation and removal mechanism 2 needs to move to the avoidance position so that the second installation and removal mechanism 2 does not affect the actions of installing and removing battery packs by the first installation and removal mechanism 1; when the second installation and removal mechanism 2 installs and removes the battery pack, the first installation and removal mechanism 1 needs to move to the avoidance position so that the first installation and removal mechanism 1 does not affect the actions of installing and removing battery packs by the second installation and removal mechanism 2.

The avoidance mechanism of the embodiment is shown in Fig. 3. The avoidance mechanism 4 comprises a turnover body 41 and a rotating shaft 42, the turnover body 41 rotates around the axis of the rotating shaft 42 to realize turnover, and the turnover body 41 is circumferentially provided with a first mounting surface 411 and a second mounting surface 412, the first installation and removal mechanism 1 is installed on the first mounting surface 411, and the second installation and removal mechanism 2 is installed on the second mounting surface 412, and the turnover body 41 rotates the idle installation and removal mechanism to the avoidance position during the turnover process.

For example, when the first installation and removal mechanism 1 is used to install and remove the battery pack, the turnover body 41 turns over, so that the first installation and removal mechanism 1 turns over to the installation and removal position, and the second installation and removal mechanism 2 turns over to the avoidance position, the first installation and removal mechanism 1 at the installation and removal position can install and remove the battery pack, and the second installation and removal mechanism 2 at the avoidance position does not affect the actions of installing and removing battery packs by the first installation and removal mechanism 1. For another example, when the second installation and removal mechanism 2 is used to install and remove the battery pack, the turnover body 41 turns over, so that the second installation and removal mechanism 2 turns over to the installation and removal position, and the first installation and removal mechanism 1 turns over to the avoidance position, the second installation and removal mechanism 2 at the installation and removal position can install and remove the battery pack, and the first installation and removal mechanism 1 at the avoidance position does not affect the actions of installing and removing battery packs by the second installation and removal mechanism 2.

In other embodiments, the mounting surfaces of the turnover body can also be several, each installation and removal mechanism is separately installed on one mounting surface, and the turnover body rotates the idle installation and removal mechanism to the avoidance position during the turnover process. The number of installation and removal mechanisms shall be determined according to the number of locking mechanisms compatible with the battery-swapping device.

### Embodiment 3

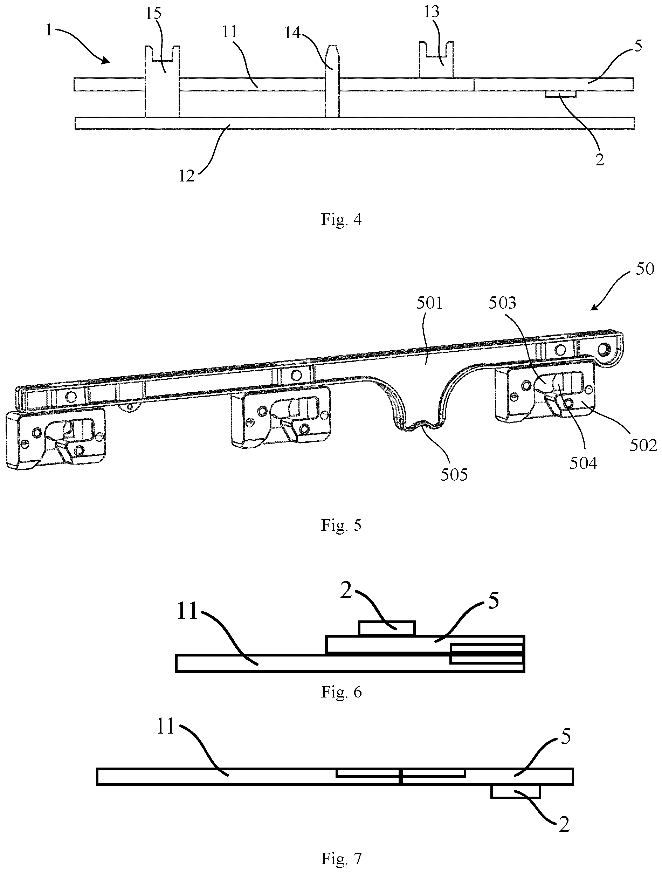

The structure of the multifunctional battery-swapping device in Embodiment 3 is roughly the same as that in Embodiment 1, but the difference is that:
as shown in Fig. 4, the first installation and removal mechanism 1 comprises an upper plate 11, a lower plate 12, a first positioning mechanism and a top rod 14, the upper plate 11 is located above the lower plate 12, and the upper plate 11 can move relative to the lower plate 12; and the first positioning mechanism in the embodiment is a first positioning fork 13, which is arranged on the upper plate 11 and is used to position the battery pack; and the top rod 14 is arranged on the lower plate 12, and is used to unlock the first locking mechanism 50.

Fig. 5 shows the first locking mechanism 50 corresponding to the first installation and removal mechanism 1, and the first locking mechanism 50 comprises a lock connecting rod 501, a lock base 502 and a lock tongue 503, wherein a lock groove 504 is formed on the lock base 502, the lock tongue 503 is located in the lock groove 504, and the lock connecting rod 501 can drive the lock tongue 503 to retract to the outside of the lock groove 504.

When unlocking the first battery pack, the top rod 14 pushes against the unlocking position 505 of the lock connecting rod 501 and drives the lock connecting rod 501 to move, so that the lock tongue 503 retracts to the outside of the lock groove 504; and the first positioning fork 13 forks the first battery pack, and the upper plate 11 drives the first battery pack to move, so that the lock shaft of the first battery pack moves out of the lock groove 504, thereby unlocking the first battery pack is achieved. When locking the first battery pack, the top rod 14 moves to a position that does not contact the lock connecting rod 501, and the first positioning fork 13 forks the first battery pack, and the upper plate 11 drives the first battery pack to move, so that the lock shaft of the first battery pack enters the lock groove 504 and the locking is achieved.

The first installation and removal mechanism 1 further comprises a second positioning mechanism, wherein the second positioning mechanism in the embodiment is a second positioning fork 15, which is fixed on the lower plate 12, wherein the second positioning fork 15 is used to match with a positioning block on a electric vehicle, so that the position between the lower plate 12 and the electric vehicle is relatively fixed when unlocking or locking the first battery pack.

It should be noted that the specific structure of the first locking mechanism 50 shown in Fig. 5 is a typical example of the locking end of the first locking mechanism. However, it can be understood that, in addition to the structure in Fig. 5, the upper plate 11 and the lower plate 12 can also lock or unlock any other components that need to be locked or unlocked by relative movement, that is, other non rotary locking mechanisms such as snap-in type or staggered tooth type locking structures; and it is only necessary to design the relative movement of the upper plate 11 and the lower plate 12 to match the locking or unlocking direction of the first locking mechanism 50.

As shown in Fig. 4, Fig. 6 to Fig. 7, the battery-swapping device further comprises a fixed plate 5, the second installation and removal mechanism 2 is fixed on the surface of the fixed plate 5 relative to the lower plate 12, and the fixed plate 5 can turn over relative to the upper plate 11, so that the second installation and removal mechanism 2 can move to the installation and removal position or avoidance position. As shown in Fig. 6, the fixed plate 5 is turned over above the upper plate 11, the second installation and removal mechanism 2 is located at the installation and removal position, the second installation and removal mechanism 2 is located above the fixed plate 5, and the second installation and removal mechanism 2 can install and remove the battery pack with the second locking mechanism; as shown in Fig. 7, the fixed plate 5 is turned over to be parallel to the upper plate 11, the second installation and removal mechanism 2 is located at the avoidance position, the second installation and removal mechanism 2 is located below the fixed plate 5, and the second installation and removal mechanism 2 does not affect the actions of installing and removing battery packs by the first installation and removal mechanism 1.

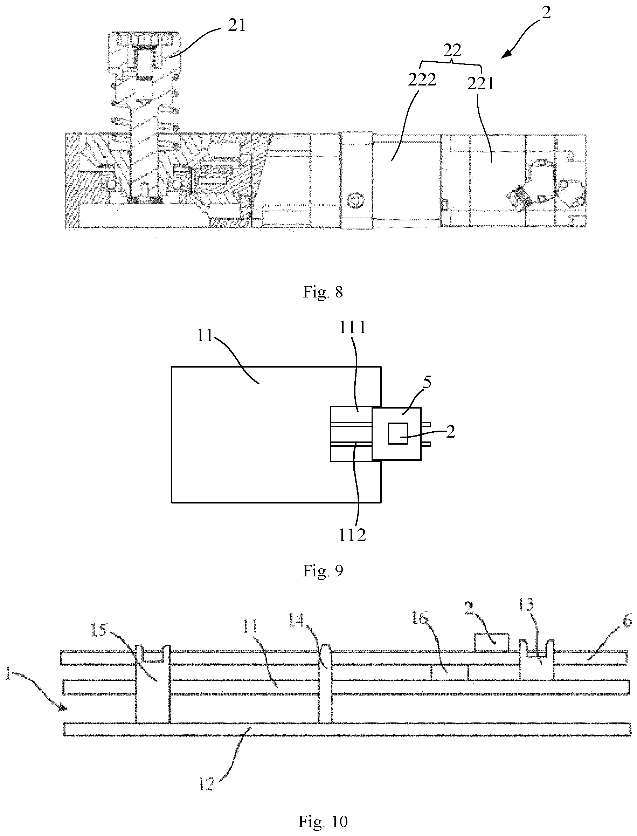

As shown in Fig. 8, the second installation and removal mechanism 2 comprises a rotation part 21 and a rotation control mechanism 22, the second locking mechanism is provided with a locking end matched with the rotation part 21, and the rotation part 21 is used to rotate the locking end of the second locking mechanism for installing and removing; and the rotation control mechanism 22 is used to control the rotation of the rotation part 21, so that the rotation part 21 can rotate the locking end and the second locking mechanism can be installed and removed.

Wherein, the rotation control mechanism 22 comprises an electric motor 221 and a decelerator 222, and the output of the electric motor 221 can be directly or indirectly input to the decelerator 222. For example, the connecting shaft (not identified) arranged on the electric motor 221 can extend into the coupling (not identified) in the decelerator 222, thus realizing the connection between the electric motor 221 and the decelerator 222. The speed of the electric motor 221 is changed by the decelerator 222, and then the decelerator 222 directly or indirectly drives the rotation part 21 to tighten or loosen the locking end of the second locking mechanism, thus realizing the removal or installation of the second battery pack. A bolt is a typical example of the locking end of the second locking mechanism. However, it can be understood that, in addition to the bolt, the rotation part 21 can be used to screw any component requiring rotation operation; and it is only necessary to design the rotation part 21 to match the shape of the locking end of the second locking mechanism.

Wherein the upper plate 11 is provided with a hidden groove, and the top rod 14 can rotate into the hidden groove; when the top rod 14 is located in the hidden groove, the top rod 14 does not affect the actions of installing and removing battery packs by the second installation and removal mechanism 2.

Wherein the first positioning fork 13 can also be installed on the upper plate 11 in a foldable manner, and when the first positioning fork 13 is folded from the vertical state to the horizontal state, the first positioning fork 13 will not affect the actions of installing and removing battery packs by the second installation and removal mechanism 2.

Wherein the second positioning fork 15 can also be installed on the lower plate 12 in a foldable manner, and when the second positioning fork 15 is folded from the vertical state to the horizontal state, the second positioning fork 15 will not affect the actions of installing and removing battery packs by the second installation and removal mechanism 2.

The selection of the hiding mode of the first positioning fork 13, the second positioning fork 15 and the top rod 14 depends on the actual demand of the installation and removal space required by the second installation and removal mechanism 2. When there are other installation and removal mechanisms besides the second installation and removal mechanism 2 in the multifunctional battery-swapping device, the first positioning fork 13, the second positioning fork 15 and the top rod 14 can also be hidden in other ways, so as to achieve the purpose of not affecting the actions of installing and removing battery packs by the other installation and removal mechanisms.

The first locking mechanism and the second locking mechanism involved in the embodiment are described by taking the Chinese patent application with application numbers of 2016110412204 and 2017112736024 as examples, and however, the two locking mechanisms in the multifunctional battery-swapping device of the invention are not limited to the specific structure in the prior art, and can also be applied to other types of battery locking structures.

### Embodiment 4

The structure of the multifunctional battery-swapping device in Embodiment 4 is roughly the same as that in Embodiment 3, but the difference is that:
as shown in Fig. 9, the edge of the upper plate 11 forms an accommodation space 111 for accommodating the fixed plate 5, wherein a sliding rod 112 is arranged in the accommodation space 111, and the fixed plate 5 is sleeved on the sliding rod 112; the fixed plate 5 slides on the sliding rod 112, so that the fixed plate 5 can slide back and forth relative to the upper plate 11; when the fixed plate 5 extends away from the upper plate 11, the second installation and removal mechanism 2 is located at the installation and removal position, and the second installation and removal mechanism 2 can install and remove the battery pack with the second locking mechanism; when the fixed plate 5 is retracted close to the upper plate 11, the second installation and removal mechanism 2 is located at the avoidance position, and the second installation and removal mechanism 2 does not affect the actions of installing and removing battery packs by the first installation and removal mechanism 1.

By means of the above structure, the position switching of the second installation and removal mechanism 2 can also be realized, so as to meet the requirement of avoiding the actions of installing and removing battery packs by the first installation and removal mechanism 1.

In addition to the avoidance mechanism described in Embodiment 3 and Embodiment 4, the avoidance mechanism can also be designed according to the actual installation and removal position and avoidance position of the second installation and removal mechanism 2. As long as the avoidance mechanism can achieve the function of moving the second installation and removal mechanism 2 to the installation and removal position or the avoidance position, it is within the protection scope required by the invention.

### Embodiment 5

The structure of the multifunctional battery-swapping device in Embodiment 5 is roughly the same as that in Embodiment 3, but the difference is that:
as shown in Fig. 10, the battery-swapping device includes an alternative tray 6, the alternative tray 6 is detachably installed on the upper plate 11, and the second installation and removal mechanism 2 is mounted on the alternative tray 6. When the second installation and removal mechanism 2 is needed for installation and removal of the battery pack, the alternative tray 6 is installed on the upper plate 11, then it can be done to install and remove the battery pack with the second locking mechanism. When the second installation and removal mechanism 2 is not needed for installation and removal of the battery pack, the replacement tray 6 is removed, which is not affect the actions of installing and removing battery packs by the first installation and removal mechanism 1.

The first installation and removal mechanism 1 further comprises a docking mechanism 16, the docking mechanism 16 is installed on the upper plate 11, and the alternative tray 6 is installed on the docking mechanism 16. Wherein, the docking mechanism 16 further comprises an electrical interface, which is used for electrical connection with an electrical interface of the second installation and removal mechanism 2. The docking mechanism 16 is used to fix the alternative tray 6, and at the same time, the electrical interface of the docking mechanism 16 is electrically connected with the electrical interface of the second installation and removal mechanism 2 to provide power for the second installation and removal mechanism 2.

### Embodiment 6

The structure of the battery-swapping device in Embodiment 6 is roughly the same as that in Embodiment 3, the embodiment provides a specific structure of a foldable positioning mechanism, and the foldable first positioning mechanism (first positioning fork 13) and the foldable second positioning mechanism (second positioning fork 15) involved in other embodiments can refer to the positioning mechanism in the embodiment.

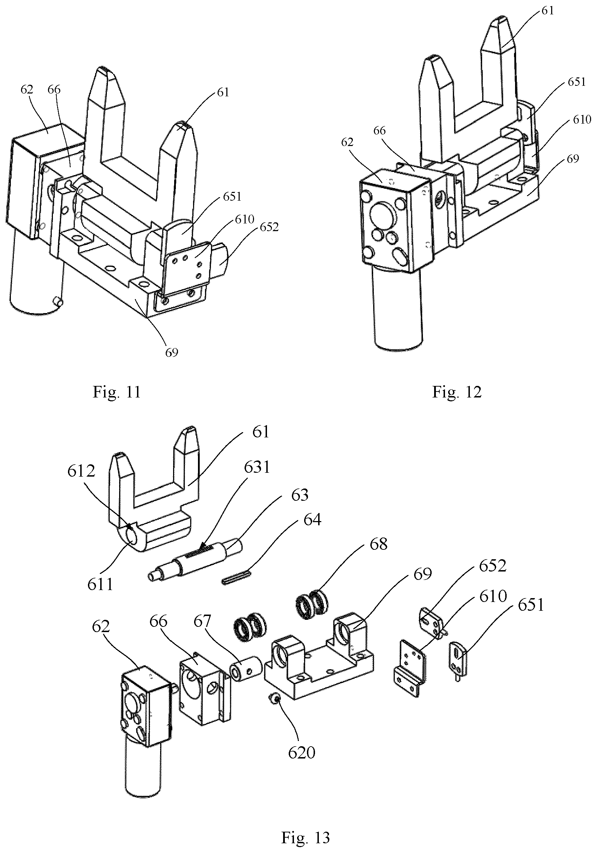

As shown in Fig. 11 to Fig. 15, the embodiment provides a positioning mechanism structure that can be turnovered and folded, enabling the positioning mechanism to switch between the vertical state and the horizontal state, that is, the positioning mechanism can be folded from the vertical state to the horizontal state, or turnovered from the horizontal state to the vertical state. When the positioning mechanism is in the vertical state, the positioning mechanism can position the battery pack normally; when the positioning mechanism is in the horizontal state, the positioning mechanism can not interfere with other positioning devices to position the battery pack and does not interfere with other installation and removal mechanisms to install and remove the battery pack.

As shown in Fig. 11 to Fig. 15, the positioning mechanism comprises a positioning mechanism body 61 and a turnover mechanism for folding the positioning mechanism body 61, the positioning mechanism body 61 is used for butting with the battery pack to achieve the positioning of the battery pack, and the turnover mechanism is connected with the positioning mechanism body 61 to drive the positioning mechanism body 61 to rotate, so that the positioning mechanism body 61 can switch between the vertical state and the horizontal state.

As shown in Fig. 13, Fig. 16 and Fig. 17, the turnover mechanism comprises a driving member 62 and a rotation axis 63, wherein the driving member 62 is connected with the rotation axis 63 to drive the rotating shaft 63 to rotate, and the rotation axis 63 is connected with the positioning mechanism body 61 to drive the positioning mechanism body 61 to rotate, so that the positioning mechanism body 61 can switch between the vertical state and the horizontal state. In the embodiment, the rotation axis 63 and the positioning mechanism body 61 are fixedly connected by connecting members, and specifically, the lower end of the positioning mechanism body 61 is provided with a connecting hole of the rotating shaft 611 which is penetrated at both ends, and the rotation axis 63 is penetrated into the connecting hole of the rotating shaft 611. The turnover mechanism also includes a connecting member connected between the rotation axis 63 and the positioning mechanism, and the connecting member in the embodiment is a pin key 64, wherein the rotation axis 63 is provided with a first keyway 631 for placing part of the pin key 64, and a second keyway 612 for placing the another part keyway 64 is arranged at the corresponding position of the connecting hole of the rotating shaft 611, and the first keyway 631 cooperates with the second keyway 612 to limit the movement of the pin key 64 in all directions, so that the position of the pin key 64 is fixed relative to the rotation axis 63 and the positioning mechanism body 61. During the rotation of the rotary shaft 63, the pin key 64 which is relatively fixed with the rotation axis 63 is driven to rotate synchronously, thereby driving the positioning mechanism body 61 which is connected with the pin key 64 to turn over.

In other alternative embodiments, other connecting members capable of realizing the above functions can also be selected to fixedly connect the rotation axis 63 and the positioning mechanism body 61, or, the connection between the rotation axis 63 and the positioning mechanism body 61 can also be realized in other forms, such as directly fixedly connecting the rotating shaft 63 and the positioning mechanism body 61, wherein the direct fixed connection method includes integral forming or welding and other forms. In the embodiment, the pin key 64 is selected as the connecting member connecting the rotation axis 63 and the positioning mechanism body 61, which has simple structure, convenient installation and can improve the assembly efficiency. The rotation axis 63 is fixedly connected with the positioning mechanism body 61, so that the position of the rotation axis 63 and the positioning mechanism body 61 is relatively fixed to ensure that the positioning mechanism body 61 can rotate synchronously with the rotation axis 63 and improve the reliability of the positioning mechanism body 61 to turn over.

The driving member 62 in the embodiment is a rotating motor, which can directly drive the rotation axis 63 to rotate. In other alternative embodiments, the driving member 62 can also be selected as another structure capable of driving the rotation of the rotation axis 63.

As shown in Fig. 13, the turnover mechanism further comprises at least one position detection device, which is used to detect the position of the positioning mechanism body 61, and judge whether the positioning mechanism body 61 has turned over to the vertical or the horizontal state, so as to ensure the reliability of the adjusting the position of the positioning mechanism body 61 in place, and thus ensure the accuracy of the positioning the battery pack by the positioning mechanism. The number of position detection devices in the embodiment is two, and in other alternative embodiments, the number of position detection devices can also be one or more.

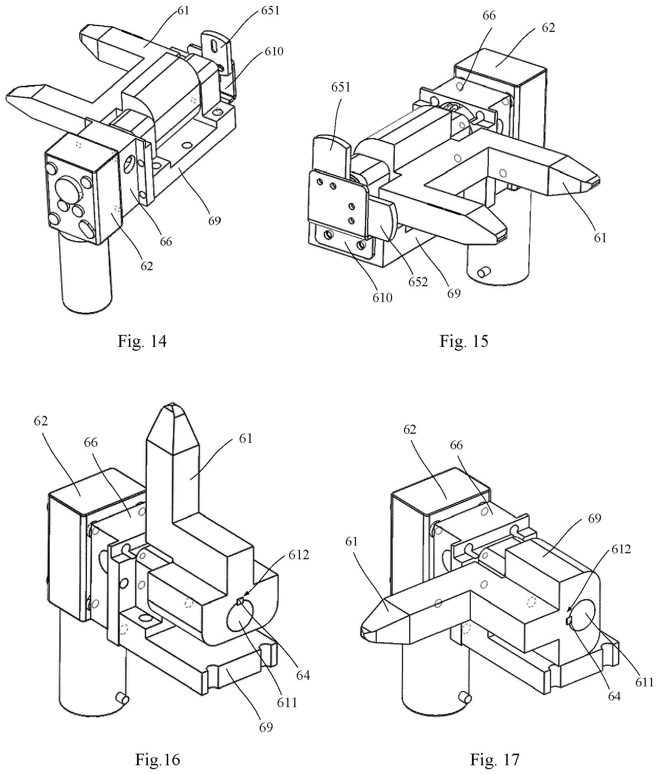

Specifically, as shown in Fig. 11 and Fig. 14, the position detection device in the embodiment comprises a vertical sensor 651 and a horizontal sensor 652, the vertical sensor 651 is used to detect whether the positioning mechanism body 61 is turned over to the vertical state, and the horizontal sensor 652 is used to detect whether the positioning mechanism body 61 is turned over to the horizontal state. The vertical sensor 651 and the horizontal sensor 652 in the embodiment are both photoelectric sensors, and the photoelectric sensor is a non-contact sensor, the positioning mechanism body 61 will not interfere with the vertical sensor 651 and the horizontal sensor 652 during the rotation process, so as to ensure the reliability of the positioning mechanism body 61 in overturning and folding. Moreover, the photoelectric sensor is simple in structure, short in response time, simple and reliable in control, capable of identifying the position of the positioning mechanism body 61 in time, and improve the reliability of the position adjustment of the positioning mechanism body 61. In other alternative embodiments, the vertical sensor 651 and the horizontal sensor 652 can be selected as other position detection devices capable of realizing the above functions, and the vertical sensor 651 and the horizontal sensor 652 can choose to use the same or different structures.

Based on the specific structure of the above positioning mechanism, the folding process of the positioning mechanism is briefly described as follows:
As shown in Fig. 16, in the process of folding the positioning mechanism body 61 from the vertical state to the horizontal state, the driving member 62 drives the rotation axis 63 to rotate, and the rotation axis 63 drives the pin key 64 connected with the rotation axis 63 to rotate synchronously, thereby driving the positioning mechanism body 61 matched with the pin key 64 to fold, and when the horizontal sensor 652 detects the positioning mechanism body 61, the driving member 62 stops driving the rotation axis 63 to rotate.

As shown in Fig. 17, in the process of overturning the positioning mechanism body 61 from the horizontal state to the vertical state, the driving member 62 drives the rotation axis 63 to rotate in a reverse direction, and the rotation axis 63 drives the pin key 64 connected with the rotation axis 63 to rotate synchronously, thereby driving the positioning mechanism body 61 matched with the pin key 64 to turn over, and when the vertical sensor 651 detects the positioning mechanism body 61, the driving member 62 stops driving the rotation axis 63 to rotate.

As shown in Fig. 13, the turnover mechanism further comprises a connecting base 66, an axle sleeve 67, a bearing 68, a turnover base 69 and a fixed bracket 610. Along the axis direction of the rotation axis 63, the driving member 62, the connecting base 66 and the turnover base 69 are connected in turn, the rotation axis 63 is connected with the driving member 62 through the connecting base 66 and the turnover base 69, and the connecting base 66 and the turnover base 69 play a role in supporting the rotation axis 63 and ensuring that the rotation axis 63 can rotate stably. The outer side of the rotation axis 63 is sleeved with an axle sleeve 67, which is connected with the rotation axis 63 via the bolt 620 to protect the rotation axis 63 and reduce the wear of the rotation axis 63. The rotation axis 63 is fixed on the turnover base 69 via the bearing 68 and rotates relative to the turnover base 69. The vertical sensor 651 and the horizontal sensor 652 are installed on the fixed bracket 610, which is fixed on the turnover base 69, and the fixed bracket 610 plays a role of supporting the vertical sensor 651 and the horizontal sensor 652. The positions of the vertical sensor 651 and the horizontal sensor 652 with respect to the turnover base 69 remain stationary to ensure the accuracy of position detection. The turnover mechanism in the embodiment further comprises a reducer, which is connected between the driving member 62 and the rotation axis 63 to reduce the speed of the driving member 62 transmitted to the rotation axis 63, and improve the overturning stability of the positioning mechanism body 61.

In addition, the existing positioning mechanism is usually installed on the battery-swapping device and moves synchronously with the battery-swapping device, wherein the highest point of the positioning mechanism is usually the highest point of the battery-swapping device. During the process of installing and removing the battery pack, the battery-swapping device needs to move to the bottom of the electric vehicle, so the height of a chassis of the electric vehicle will affect the movement of the battery-swapping device. In the prior art, the height of the chassis of the electric vehicle is usually lower than the height of the battery-swapping device, therefore, during the process of installing and removing the battery pack, the electric vehicle needs to be lifted before the battery-swapping device can be moved to the bottom of the electric vehicle. Moreover, after the process of installing and removing the battery pack, the electric vehicle can only be lowered after the battery-swapping device is removed from the bottom of the electric vehicle to prevent interference between the electric vehicle and the battery-swapping device, and the whole process takes a long time for battery-swapping and owns low battery-swapping efficiency.

Since the highest point of the positioning mechanism is usually the highest point of the battery-swapping device, when the positioning mechanism is in the vertical state, the overall height of the battery-swapping device is the highest, and when the positioning mechanism is in the horizontal state, the overall height of the battery-swapping device is the lowest. Therefore, the positioning mechanism that can be turned over and folded provided in the embodiment can change the position of the highest point of the positioning mechanism, that is, change the overall height of the battery-swapping device, so that the battery-swapping device can enter and exit the bottom of the electric vehicle easily. That is to say, before the battery-swapping device enters the bottom of the electric vehicle, the positioning mechanism can be kept horizontal state, and at this time, the overall height of the battery-swapping device is the lowest and can be lower than the height of the chassis of the electric vehicle, so that the battery-swapping device can drive into the bottom of the electric vehicle even if the electric vehicle is not lifted. The lifting process of the electric vehicle and the process of turning the positioning mechanism to the vertical state can be carried out at the same time, and the lowering process of the electric vehicle and the process of folding the positioning mechanism to the horizontal state can also be carried out at the same time, so as to shorten the battery swapping time and improve the battery swapping efficiency.

Specifically, the control method of the battery-swapping device can include the following steps: step 1, control the first positioning mechanism and the second positioning mechanism to turnover to the horizontal state; Step 2: control the battery-swapping device to move to the bottom of the electric vehicle.

The first positioning mechanism and the second positioning mechanism can be turned over to the horizontal state before the vehicle drives in, and when the electric vehicle is not lifted, the battery-swapping device can directly move to the bottom of the electric vehicle without waiting for the lifting process of the electric vehicle, thus shortening the battery swapping time and improving the battery swapping efficiency.

Wherein, after the step 2, it also includes: step 3, control the first positioning mechanism and the second positioning mechanism to turn over to the vertical state and execute the corresponding battery removal process.

When the battery-swapping device moves to the installation and removal position at the bottom of the electric vehicle, the first positioning mechanism and the second positioning mechanism can be switched from the horizontal state to the vertical state to realize the positioning of the battery pack. In this process, the electric vehicle can be lifted synchronously, on the one hand, it is used to prevent the first positioning mechanism and the second positioning mechanism from interfering with the bottom of the electric vehicle, on the other hand, it can further shorten the battery swapping time and improve the battery swapping efficiency.

Wherein, before the step 1, it can also include: judge the vehicle information of the electric vehicle, and determine whether to turn over the position state of the first positioning mechanism or the second positioning mechanism according to the height of the chassis and other relevant information in the vehicle information. Therefore, whether the step 1 is required depends on the height of the chassis of the electric vehicle, and for electric vehicles with higher chassis, the step 1 can be omitted to simplify the battery swapping procedure.

Secondly, the number of positioning mechanisms on a battery-swapping device is usually multiple to ensure that all parts of the battery pack are evenly stressed and improve the positioning stability of the battery pack. In a preferable embodiment, each positioning mechanism can independently realize overturning and folding, so as to make each positioning mechanism flexible in control and not interfering with each other. In other alternative embodiments, multiple positioning mechanisms in a battery-swapping device can also jointly control the overturning and folding.

In addition, in the prior art, one part of the positioning mechanism on the battery-swapping device is arranged on the frame of the battery-swapping device, and the other part is arranged on the battery tray of the battery-swapping device, and in order to realize that a battery-swapping device can position battery packs of different sizes, it can only be realized by changing the battery trays of the positioning mechanism at different positions, which is more cumbersome and has higher cost. However, if the battery-swapping device adopts the positioning mechanism in the embodiment, multiple groups of positioning mechanisms can be installed on the frame of the battery-swapping device, and for battery packs of different sizes, it is only necessary to select the corresponding positioning mechanism to be in the vertical state, and other positioning mechanisms to be folded to the overturned state, so there is no need to replace the battery tray, and the cost is low. In another embodiment, the structure of the first positioning mechanism and the second positioning mechanism can also adopt a U-shaped structure different from that of the embodiment, for example, it can be L-shaped, rod-shaped, etc., as long as it can realize the positioning function with the battery pack or the chassis of the electric vehicle.

Although the specific embodiments of the present invention are described above, it should be understood by those skilled in the art that this is only an example, and the scope of protection of the present invention is defined by the appended claims. Those skilled in the art can make various changes or modifications to these embodiments without departing from the principles and essence of the present invention, but these changes and modifications fall into the scope of protection of the present invention.

## Claims

1. An installation and removal mechanism, which is used for installing and removing a battery pack locked by a locking mechanism, which is **characterized in that** the installation and removal mechanism comprises an upper plate and a first positioning mechanism, and the first positioning mechanism is installed on the upper plate in a foldable manner, such that the first positioning mechanism can perform position switching between a vertical state and a horizontal state, and the first positioning mechanism is used for positioning the battery pack when the first positioning mechanism is in the vertical state, and then driving the battery pack to move by means of the upper plate.

2. The installation and removal mechanism as claimed in claim 1, wherein the installation and removal mechanism further comprises a lower plate and a top rod;
the lower plate is located below the upper plate, and the upper plate can move relative to the lower plate;
the top rod is arranged on the lower plate, and is used for unlocking the locking mechanism;
preferably, the upper plate is provided with a hidden groove, and the top rod can rotate into the hidden groove.

3. The installation and removal mechanism as claimed in claim 2, wherein the installation and removal mechanism further comprises a second positioning mechanism, which is fixed on the lower plate, wherein the second positioning mechanism is used to match with a positioning block on a electric vehicle, so that the position between the lower plate and the electric vehicle can be relatively fixed.

4. The installation and removal mechanism as claimed in claim 3, wherein the second positioning fork is installed on the upper plate in a foldable manner, such that the second positioning mechanism can perform position switching between a vertical state and a horizontal state.

5. A multifunctional battery-swapping device, which is **characterized in that** the multifunctional battery-swapping device comprises the installation and removal mechanism as claimed in any one of claims 1-4.

6. A multifunctional battery-swapping device, which is used for installing and removing battery packs locked by different locking mechanisms, which is **characterized in that** the battery-swapping device comprises:
at least two installation and removal mechanisms, wherein each installation and removal mechanism corresponds to one locking mechanism, and different installation and removal mechanisms are respectively used for installing and removing battery packs locked by different locking mechanisms.

7. The multifunctional battery-swapping device as claimed in claim 6, wherein the multifunctional battery-swapping device further comprises:
a control mechanism, which is used to receive the type of the locking mechanism of the battery pack to be installed and removed, and the control mechanism is also used to control the corresponding installation and removal mechanism to complete the installation and removal of the battery pack.

8. The multifunctional battery-swapping device as claimed in claim 6 or 7, wherein the battery-swapping device further comprises a base, and the said at least two installation and removal mechanisms are detachably installed on the base;
and/or, the battery-swapping device is also provided with an avoidance area, and a installation and removal mechanism located in the avoidance area does not affect the actions of installing and removing battery packs by other installation and removal mechanisms.

9. The multifunctional battery-swapping device as claimed in any one of claims 6-8, wherein the battery-swapping device is also provided with an avoidance mechanism, which moves a idle installation and removal mechanism to an avoidance position, and a installation and removal mechanism located in the avoidance position does not affect the actions of installing and removing battery packs by other installation and removal mechanisms;
preferably, the avoidance mechanism comprises a turnover body, which is provided with a number of mounting surfaces circumferentially, wherein each installation and removal mechanism is separately installed on one mounting surface, and the turnover body rotates the idle installation and removal mechanism to the avoidance position during the turnover process.

10. The multifunctional battery-swapping device as claimed in any one of claims 6-8, wherein the said at least two installation and removal mechanisms comprise a first installation and removal mechanism and a second installation and removal mechanism;
the locking mechanism comprises a first locking mechanism and a second locking mechanism, wherein the first locking mechanism is a non rotary locking mechanism, and the second locking mechanism is a rotary locking mechanism;
the first installation and removal mechanism is used for installing and removing the first locking mechanism, and the second installation and removal mechanism is used for installing and removing the second locking mechanism.

11. The multifunctional battery-swapping device as claimed in any one of claims 6-10, wherein the installation and removal mechanism is a first installation and removal mechanism, and the locking mechanism corresponding to the first installation and removal mechanism is a first locking mechanism, wherein the first installation and removal mechanism comprises:
an upper plate and a lower plate, the upper plate is located above the lower plate, and the upper plate can move relative to the lower plate;
a first positioning mechanism, which is arranged on the upper plate, and the first positioning mechanism is used for positioning the battery pack;
a top rod, which is arranged on the lower plate, and the top rod is used for unlocking the first locking mechanism.

12. The multifunctional battery-swapping device as claimed in claim 11, wherein the battery-swapping device further comprises a fixed plate and a second installation and removal mechanism, and the locking mechanism corresponding to the second installation and removal mechanism is a second locking mechanism; the second installation and removal mechanism is fixed on the fixed plate, and the fixed plate can move relative to the upper plate, so that the second installation and removal mechanism can move to an installation and removal position or avoidance position; when the second installation and removal mechanism is located at the installation and removal position, the second installation and removal mechanism can install and remove the battery pack with the second locking mechanism; when the second installation and removal mechanism is located at the avoidance position, the second installation and removal mechanism does not affect the actions of installing and removing battery packs by the first installation and removal mechanism.

13. The multifunctional battery-swapping device as claimed in claim 12, wherein the fixed plate can be turned over relative to the upper plate; when the second installation and removal mechanism is located at the installation and removal position, the second installation and removal mechanism is located above the fixed plate; when the second installation and removal mechanism is located at the avoidance position, the second installation and removal mechanism is located below the fixed plate.

14. The multifunctional battery-swapping device as claimed in claim 12 or 13, wherein edges of the upper plate forms an accommodation space for accommodating the fixed plate, and the fixed plate can slide back and forth relative to the upper plate; when the fixed plate extends far away from the upper plate, the second installation and removal mechanism is located at the installation and removal position; when the fixed plate is retracted close to the upper plate, the second installation and removal mechanism is located at the avoidance position.

15. The multifunctional battery-swapping device as claimed in any one of claims 11-14, wherein the upper plate is provided with a hidden groove, and the top rod can rotate into the hidden groove; when the top rod is located in the hidden groove, the top rod does not affect the actions of installing and removing battery packs by the other installation and removal mechanisms;
and/or, the first installation and removal mechanism further comprises a second positioning mechanism, which is fixed on the lower plate, and the second positioning mechanism is used to match with a positioning block on a electric vehicle to ensure that the position between the lower plate and the electric vehicle is relatively fixed.

16. The multifunctional battery-swapping device as claimed in any one of claims 11-15, wherein the first positioning mechanism is installed on the upper plate in a foldable manner, when the first positioning mechanism is folded from the vertical state to the horizontal state, the first positioning mechanism does not affect the actions of installing and removing battery packs by the other installation and removal mechanisms;
and/or, the second positioning mechanism on the lower plate is installed on the lower plate in a foldable manner, when the second positioning mechanism is folded from the vertical state to the horizontal state, the second positioning mechanism does not affect the actions of installing and removing battery packs by the other installation and removal mechanisms.

17. The multifunctional battery-swapping device as claimed in claim 16, wherein the first positioning mechanism or the second positioning mechanism comprises a positioning mechanism body and a turnover mechanism for driving the positioning mechanism body to turn over;
preferably, the turnover mechanism comprises a driving member and a rotating shaft, the rotating shaft is connected with the positioning mechanism body, and the driving member drives the positioning mechanism body to turn over by driving the rotating shaft to rotate;
preferably, the rotating shaft is fixedly connected with the positioning mechanism body directly or through a connecting member.

18. The multifunctional battery-swapping device as claimed in claim 17, wherein the turnover mechanism further comprises at least one position detection device, which is used to detect the position of the positioning mechanism body.

19. The multifunctional battery-swapping device as claimed in any one of claims 11-18, wherein the battery-swapping device further comprises an alternative tray and a second installation and removal mechanism, the alternative tray is detachably installed on the upper plate, and the second installation and removal mechanism is mounted on the alternative tray;
preferably, the first installation and removal mechanism further comprises a docking mechanism, the docking mechanism is installed on the upper plate, and the alternative tray is installed on the docking mechanism.

20. The multifunctional battery-swapping device as claimed in claim 19, wherein the docking mechanism further comprises an electrical interface, which is used for electrical connection with an electrical interface of the second installation and removal mechanism.

21. The multifunctional battery-swapping device as claimed in any one of claims 11-20, wherein the installation and removal mechanism is a second installation and removal mechanism, and the locking mechanism corresponding to the second installation and removal mechanism is a second locking mechanism, and the second installation and removal mechanism comprises:
a rotation part, wherein the second locking mechanism is provided with a locking end matched with the rotation part, and the rotation part is used to rotate the locking end of the second locking mechanism for installation and removal;
a rotation control mechanism, which is used to control the rotation of the rotation part, so that the rotation part can rotate the locking end to realize the installation and removal of the second locking mechanism.

22. A battery swapping station, which is **characterized in that** the battery swapping station comprises the multifunctional battery-swapping device as claimed in any one of claims 6-21.

23. The battery swapping station as claimed in claim 22, wherein the battery swapping station further comprises:
a battery compartment, wherein the battery compartment stores various battery packs corresponding to different locking mechanisms;
and/or, the number of the multifunctional battery-swapping device is two, and the two multifunctional battery-swapping device are respectively a first battery-swapping device and a second battery-swapping device; the first battery-swapping device is used to remove a low charged battery pack from an electric vehicle, and the second battery-swapping device is used to install a fully charged battery pack on the electric vehicle.
